# EUROPÄISCHE PATENTSCHRIFT

(11) **EP 3 556 458 B1**
(45) Veröffentlichungstag und Bekanntmachung des Hinweises auf die Patenterteilung: **22.09.2021**
(21) Anmeldenummer: 19169346.4
(22) Anmeldetag: 15.04.2019
(51) Int. Cl.: B01F 7/00, A01C 3/02

(54) **TAUCHRÜHRER**
SUBMERGED STIRRER
AGITATEUR IMMERGÉ

(30) Priorität: 16.04.2018 DE 202018102071 U
(43) Veröffentlichungstag der Anmeldung: 23.10.2019
(73) Patentinhaber: Thürwächter GmbH & Co. KG, 87477 Sulzberg (DE)
(72) Erfinder: THÜRWÄCHTER, Paul, 87477 Sulzberg (DE)
(74) Vertreter: Spachmann, Holger

(56) Entgegenhaltungen:
- DE-A1- 3 931 918
- DE-U1- 9 414 920
- DE-U1- 20 111 596
- DE-U1- 29 502 974

## Beschreibung

Die Erfindung betrifft einen Tauchrührer für einen Flüssigkeitsbehälter mit einem Rührwerk, das verschiebbar an einer Säule angeordnet ist, wobei das Rührwerk mit einem Rührwerksseil verbunden ist, durch das das Rührwerk höhenverstellbar entlang der Säule führbar ist. Des Weiteren betrifft die Erfindung einen Flüssigkeitsbehälter, in dem eine Säule eines Tauchrührers eingetaucht ist, wobei der Flüssigkeitsbehälter eine Abdeckung aufweist, unter der ein Rührwerk des Tauchrührers angeordnet ist, sowie eine Biogasanlage, in dem eine Säule eines Tauchrührers, wobei der Flüssigkeitsbehälter eine Abdeckung aufweist, unter der ein Rührwerk des Tauchrührers angeordnet ist.

Um einen Gärprozess zu verbessern und eine Bildung von inhomogenen Schichten in einer Füllmasse einer Biogasanlage zu vermeiden, sind Tauchrührer mit Rührwerken zum Rühren und Durchmischen der Füllmasse bekannt. Ein solches Rührwerk umfasst üblicherweise einen Motor, der ein Elektromotor oder Hydraulikmotor mit einer im eingebauten Zustand horizontalen Abtriebswelle sein kann, an der ein Propeller mit Rührflügeln angeordnet ist.

Die Wirkung des Rührwerks wird verbessert, wenn der Rührvorgang in unterschiedlichen Höhen durchgeführt wird. Dazu wird das Rührwerk in die Füllmasse der Biogasanlage eingetaucht. Das Rührwerk wird mittels eines Schiebers, der mit dem Rührwerk fest verbunden ist, an einer vertikalen Säule, welche sich über die gesamte Höhe beispielsweise eines Fermenters der Biogasanlage erstreckt, höhenverstellbar geführt. Die Säule ist üblicherweise ein Rohr oder Profilstahl, an dem der Schieber durch ein Rührwerksseil linear verschiebbar ist. Das Rührwerksseil wirkt der eigenen Gewichtskraft des Rührwerks entgegen.

Das Rührwerksseil ist mit einer betätigbaren Seiltrommel verbunden, wobei das Ende des Rührwerksseils mit dem Rührwerk und/oder dem Schiebeteil verbunden ist. Die betätigbare Rührwerksseiltrommel ist oberhalb des oberen Niveaus der Füllmasse innerhalb oder außerhalb des Fermenters entlang der Säule angebracht. Die abgewickelte Rührwerksseillänge bestimmt die zugeordnete Höhenposition des Rührwerks. Das Eigengewicht des Rührwerks und des Schiebeteils erzeugt eine Spannung im Rührwerksseil und bewirken eine Kraft entlang der Säule. Zur Änderung der Höheneinstellung wird das Zugseil mehr oder weniger aufoder abgewickelt und fixiert, um dem Eigengewicht entgegenzuwirken. Dieser Vorgang kann in bekannter Weise von Hand oder motorisiert erfolgen.

Aus der DE 201 11 596 U1 ist ein Tauchrührer für einen Flüssigkeitsbehälter mit einem Rührwerk bekannt, welches verschiebbar an einer Säule angeordnet ist. Das Rührwerk ist mit einem Rührwerkseil verbindbar, mittels welchem das Rührwerk höhenverstellbar entlang der Säule führbar ist. Damit offenbart die DE 201 11 596 U1 einen Tauchrührer entsprechend dem Oberbegriff des Anspruchs 1.

Die bekannten Tauchrührer sind nachteilig ausgelegt, da ein Defekt eines Bauteils zum Verschieben des Rührwerks ein unkontrolliertes Absinken der Rührvorrichtung in die Füllmasse auslöst. Das so abgesunkene Rührwerk ist bei solch einem Fehlerzustand nur schwer zu erreichen. Selbst wenn eine Notfallbremse das unkontrollierte Absinken verhindert, ist das gebremste Rührwerk üblicherweise nur schwer zu erreichen. Beispielsweise führt ein Reißen des Rührwerksseils dazu, dass das Rührwerk nicht mehr mittels des Rührwerksseils aus der Füllmasse gehoben werden kann. Es ist in solch einem Fall notwendig, dass entweder die Füllmasse aus dem Behälter entnommen wird oder ein höchstqualifizierter Bergungstaucher die Füllmasse im Behälter, also im Fermenter, betritt und ein Hilfsseil händisch an dem Rührwerk befestigt, um dieses in einer gesonderten Bergungsmaßnahme zu heben. Diese Maßnahmen sind teuer und zeitaufwendig und führen unweigerlich zu hohen wirtschaftlichen Einbußen. Dieser Nachteil des Stands der Technik wird erfindungsgemäß behoben.

Der Erfindung liegt die Aufgabe zugrunde, ein Rührwerk für einen Flüssigkeitsbehälter insbesondere einer Biogasanlage bereitzustellen, das auf einfache und kostengünstige Weise bei einem Defekt einer Vorschubeinheit zum Bewegen eines Rührwerks, insbesondere bei einem Reißen eines Rührwerksseils der Vorschubeinheit, eine Bergung des Rührwerks ermöglicht.

Die Aufgabe wird durch einen Tauchrührer, wie eingangs beschrieben, gelöst, der sich dadurch auszeichnet, dass ein Bergeschieber bezüglich der Erdanziehungsrichtung unterhalb des Rührwerks an der Säule angebracht ist und mittels eines an dem Bergeschieber angebrachten Bergeseils entlang der Säule verschiebbar ist.

Der erfindungsgemäße Tauchrührer für einen Flüssigkeitsbehälter insbesondere einer Biogasanlage hat gegenüber dem Stand der Technik den Vorteil, dass bei einem Defekt eines an einem Rührwerk angebrachten Rührwerksseils das Rührwerk auf einfache und kostengünstige Weise aus dem Flüssigkeitsbehälter geborgen werden kann. Dazu ist das Rührwerk an einer Säule angeordnet und kann entlang der Längsrichtung der Säule verschoben werden. Grundsätzlich ist die Säule dazu eingerichtet, stehend in einem Flüssigkeitsbehälter angeordnet zu werden. Der Tauchrührer ist im Betrieb des Flüssigkeitsbehälters in einer Füllmasse eingetaucht. Dabei wird die Säule so ausgerichtet, dass die Gewichtskraft des Rührwerks dieses nach unten zieht. Dadurch kann das Rührwerk in die Füllmasse abgesenkt werden. Das an dem Rührwerk befestigte Rührwerksseil ermöglicht das Verschieben des Rührwerks entlang der Säule, indem am Rührwerksseil eine der Gewichtskraft entgegengesetzte größere Kraft ausgeübt wird. So kann die Höhe bei dem das Rührwerk betrieben werden soll, mittels des Rührwerksseils eingestellt werden.

Um die erfindungsgemäßen Vorteile zu erlangen, wird vorgeschlagen einen Bergeschieber unterhalb des Rührwerks an der Säule anzuordnen. Der Bergeschieber ist als ein zusätzliches jedoch nicht unmittelbar mit dem Rührwerk verbundenes Bauteil zu verstehen. Es ist separat an der Säule angebracht und bezüglich der Erdanziehungskraft unterhalb des Rührwerks, also zwischen Boden und Rührwerk an der Säule verschiebbar positioniert. An dem Bergeschieber ist ein Bergeseil befestigt, mit dem der Bergeschieber entlang der Säule verschoben wird.

Tritt nun ein Fehlerzustand ein, bei dem das Rührwerksseil reißt und das Rührwerk nur noch schwer aus dem Flüssigkeitsbehälter geborgen werden kann, bietet das Bergeseil mit dem Bergeschieber die Möglichkeit das Rührwerk wieder nach oben zu befördern. Falls sich das Rührwerk nicht von selbst bis zum Bergeschieber absenkt, wird am Bergeseil gezogen bis der Bergeschieber von unten an dem Rührwerk anliegt. Wird nun weitergezogen drückt der Bergeschieber von unten mit einer Kraft nach oben gegen das Rührwerk, sodass das Rührwerk gegen die Erdanziehungskraft nach oben geschoben wird. Dies kann nun so lange erfolgen bis das Rührwerk in eine Position entlang der Säule gebracht wird, in der es durch eine Reparaturmaßnahme wieder in einen einwandfreien Betriebszustand gebracht werden kann.

Vorteilhafte Weiterbildungen und Alternativen sind in den Unteransprüchen aufgeführt.

Vorteilhafter Weise kann eine Seilwinde an einem oberen Ende der Säule angebracht sein. Das obere Ende der Säule ist dabei oberhalb des Rührwerks, und das Rührwerksseil und/oder das Bergeseil können sich bis zur Seilwinde erstrecken. Das Rührwerksseil und/oder das Bergeseil können auf die Seilwinde aufgewickelt werden. Durch die Seilwinde wird beim Aufwickeln eine Kraft in entgegengesetzter Richtung zur Erdanziehungskraft in dem jeweiligen Seil erzeugt. Dadurch kann das Rührwerk und/oder der Bergeschieber aufwärts gezogen werden. Wenn beispielsweise das Rührwerksseil reißt, kann das Bergeseil durch die Seilwinde aufgewickelt werden, und das Rührwerk durch den Bergeschieber nach oben in eine für eine Reparaturmaßnahme bequeme Position gebracht werden. Der Bergeschieber wird aus seiner Ausgangsposition an einem unteren Ende der Säule nach oben gezogen. Daher ist es auch von Vorteil die Seilwinde im Bereich des oberen Endes der Säule anzuordnen, da in diesem Bereich auch die Reparaturmaßnahme erfolgen kann. Die Seilwinde kann von Hand oder mittels eines Motors, insbesondere eines Elektromotors, betrieben werden.

Ist das Rührwerk mittels des Bergeschiebers nach oben befördert worden, so hat der Bergeschieber seine Ausgangsposition verlassen und befindet sich im Bereich des oberen Endes der Säule. Eine vorteilhafte Weiterbildung weist neben dem Bergeseil ein Rückholseil an den Bergeschieber auf, welches eine Bewegung des Bergeschiebers nach unten ermöglicht. Insbesondere ist ein Rückholseil bei einem mit einer schwer zu durchdringenden Füllmasse befüllten Flüssigkeitsbehälter vorteilhaft. Solch eine Füllmasse kann eine hochviskose Flüssigkeit oder eine dichte Suspension sein. Es ist denkbar, dass der Flüssigkeitsbehälter für eine Biogasanlage verwendet wird, die mit Bioabfällen aus der Tierhaltung oder Lebensmittelverarbeitung oder des Pflanzenanbaus gefüllt ist. In solch eine Füllmasse kann ein Bergeschieber gegebenenfalls aufgrund seines geringen Gewichts nicht selbstständig eindringen und in seine Ausgangsposition zurücksinken. Damit der Bergeschieber dennoch in seine Ausgangsposition abgesenkt werden kann, wird an dem Rückholseil eine nach unten wirkende Zugkraft erzeugt. So ist man nicht gezwungen sich auf die Gewichtskraft des Rührwerks zu verlassen, um ein Befördern des Bergeschiebers in die Ausgangsposition zu bewerkstelligen. Das Rückholseil kann ebenfalls mittels der Seilwinde am oberen Ende der Säule oder mittels einer separaten Seilwinde oder von Hand gezogen werden.

Vorzugsweise ist an dem unteren Ende der Säule eine untere Rückholumlenkrolle angeordnet. Die untere Rückholumlenkrolle lenkt das Rückholseil und somit die in dem Rückholseil wirkende Kraft um. Insbesondere wird eine Umlenkung um 180° erzeugt. Daher kann es möglich sein, von oben entgegengesetzt der Erdanziehungsrichtung an dem Rückholseil zu ziehen und dennoch eine nach unten gerichtete Kraft an den Bergeschieber zu erzeugen.

Des Weiteren ist in dem Vorschlag vorteilhafter Weise vorgesehen, am oberen Ende der Säule eine obere Rückholumlenkrolle anzubringen, mit der das Rückholseil von der Säule weggelenkt werden kann. Dadurch wird eine einfache Bedienung der Vorrichtung gewährleistet. Die Umlenkrolle ist von Vorteil, um das Rückholseil beispielsweise aus einer seitlichen Öffnung des Tauchrührers neben der Säule herauszuführen. So kann ein händisches oder motorunterstütztes Ziehen deutlich vereinfacht werden, da das Rückholseil von der Säule beanstandet ist.

In einer vorteilhaften Ausgestaltung ist vorgesehen, dass die Säule fluchtend mit der Erdanziehungskraft ausgerichtet ist, sodass die Säule im Lot zur Erdoberfläche steht, sodass die gesamte Gewichtskraft des Rührwerks nach unten wirkt. Das Bergeseil wirkt in solch einem Fall der gesamten Gewichtskraft des Rührwerks entgegen. Weist der Tauchrührer ein schweres Rührwerk auf, kann ein entsprechend stabiles Seil und eine kräftige Seilwinde vorgesehen werden. Die Seilwinde kann ein Getriebe mit einem Motor oder einer Handkurbel aufweisen. Es ist auch ein Flaschenzug denkbar. Alternativ kann die Säule gegenüber dem Lot verkippt werden, wobei die von dem Bergeseil zu haltende Gewichtskraft mit einem größeren Kippwinkel abnimmt. Für die verminderte Gewichtskraft kann ein entsprechend schwächeres Bergeseil verwendet werden.

Der Bergeschieber kann vorteilhafter Weise die Säule umgreifen und wie eine Art Schlitten entlang der Säule gleiten. Es können in dem Bergeschieber Rollen angeordnet werden, die auf der Säule entlang rollen. Die Säule kann rohrförmig ausgebildet sein, wobei die Säule als Vierkant- oder Rundrohr ausgebildet ist. Der Bergeschieber umgreift dabei die Säule an deren Umfang an wenigstens zwei Seiten. Der Bergeschieber weist vorzugsweise an wenigstens zwei Seiten jeweils ein Führungsblech auf, das an einem Rand einen kreisförmigen Ausschnitt ausgeformt hat. Ferner kann ein Teil des Bergeschiebers bei einer weiteren Ausführungsform in der Säule aufgenommen sein. Bei dieser alternativen Ausführungsform gleitet der teilweise aufgenommene Bergeschieber innerhalb einer Führungsausnehmung entlang der Säule.

Geschickter Weise ist vorgesehen, dass der Tauchrührer quer zur Säule ausgerichtet ist. Dabei weist das Rührwerk einen Propeller auf, welcher mittels einer Abtriebswelle von einem Motor angetrieben werden kann. Der Propeller kann an einem distalen Ende des Rührwerks angebracht werden. Das gesamte Rührwerk ist vorzugsweise auf einem Rührwerksschlitten befestigt, welcher verschiebbar auf der Säule angeordnet ist. Der Rührwerksschlitten kann die Säule umgreifen. Alternativ kann der Rührwerksschlitten innerhalb der Säule geführt werden. Der Rührwerksschlitten ist insbesondere baugleich zum Bergeschieber aufgebaut.

Des Weiteren ist günstiger Weise vorgesehen, dass das Bergeseil bezüglich der Verschieberichtung entlang der Säule an einer dem Rückholseil gegenüberliegenden Seite des Bergeschiebers angebracht sein kann. Vorteilhafterweise ist das Bergeseil an einer oberen Seite und das Rückholseil an einer unteren Seite des Bergeschiebers angebracht. Alternativ können beide Seile an einem gleichen Punkt am Bergeschieber angebracht sein. Die Seile können mittels Ösen und Karabinerhaken am Bergeschieber und/oder am Rührwerk und/oder an der Seilwinde befestigt werden.

Um eine Kollision der Seile miteinander zu vermeiden, ist es von besonderem Vorteil das Rührwerksseil auf einer dem Bergeseil und/oder dem Rückholseil gegenüber liegenden Seite der Säule entlang zu führen. Beispielsweise kann das Rührwerksseil auf der Seite der Säule entlanggeführt werden, von der sich das Rührwerk aus in einer Richtung quer zu Säule erstreckt. Auf der gegenüberliegenden Seite der Säule können dann das Bergeseil und/oder das Rückholseil entlanggeführt werden.

Die eingangs beschriebene Aufgabe wird auch durch ein Flüssigkeitsbehälter entsprechend Anspruch 12 gelöst, der sich dadurch auszeichnet, dass ein Bergeschieber bezüglich der Erdanziehungsrichtung unterhalb des Rührwerks an der Säule angebracht ist, und mittels eines an dem Bergeschieber angebrachten Bergeseils entlang der Säule verschiebbar ist. Die in dieser Anmeldung genannten Vorteile, die im Zusammenhang mit dem erfindungsgemäßen Tauchrührer genannt worden sind, treffen in gleicher Weise auch für den erfindungsgemäßen Flüssigkeitsbehälter zu.

In einer weiteren bevorzugten Ausführungsform ist vorgesehen, dass der Flüssigkeitsbehälter, in den der Tauchrührer eingetaucht ist, vorzugsweise eine Abdeckung aufweist, durch die der Tauchrührer in den Behälterinnenraum eingeführt werden kann. Die Abdeckung ist auf einer Oberseite des Flüssigkeitsbehälters angeordnet, wobei auf der Außenseite der Abdeckung das obere Ende der Säule angeordnet sein kann. Die Seilwinde kann also außerhalb des Behälterinnenraums sein. Dadurch kann ein Austreten von Gas oder Flüssigkeit verhindert werden.

Der Tauchrührer steht vorzugsweise mit der Säule am unteren Ende auf einem Boden des Flüssigkeitsbehälters. Die Säule kann lediglich auf den Boden gestellt oder verschraubt werden. Es ist auch möglich eine Rolle am unteren Ende anzuordnen, die auf dem Boden zu liegen kommt.

Ferner kann am Durchstoßpunkt der Säule durch die Abdeckung eine gasdichte Durchführung des Tauchrührers vorgesehen sein, sodass ein Austreten von Gas oder Flüssigkeit aus dem Flüssigkeitsbehälter verhindert wird. Die gasdichte Durchführung wird vorzugsweise auf die Abdeckung aufgesetzt. Weiter ist insbesondere eine Luke im Bereich der gasdichten Durchführung ausgebildet, durch die Reparaturmaßnahmen oder eine Entnahme des Rührwerks aus dem Flüssigkeitsbehälter möglich ist. Beispielsweise kann durch die Luke ein defektes Seil repariert werden.

Die eingangs beschriebene Aufgabe wird auch durch eine Biogasanlage entsprechend Anspruch 15 gelöst, die sich dadurch auszeichnet, dass ein Bergeschieber bezüglich der Erdanziehungsrichtung unterhalb des Rührwerks an der Säule angebracht ist, und mittels eines an dem Bergeschieber angebrachten Bergeseils entlang der Säule verschiebbar ist. Die vorgenannten Vorteile, die im Zusammenhang mit dem erfindungsgemäßen Tauchrührer bzw. erfindungsgemäßen Flüssigkeitsbehälter genannt worden sind, treffen in gleicher Weise auch für die erfindungsgemäße Biogasanlage zu.

In den Figuren ist die Erfindung schematisch dargestellt. Die vorteilhafte Ausgestaltung der Erfindung ist in der folgenden Figurenbeschreibung offenbart. Es zeigen
- Fig. 1: einen erfindungsgemäßen Tauchrührer in einem Betriebszustand, in dem ein Rührwerk mittels eines Rührwerksseils verschoben wird,
- Fig. 2: den Tauchrührer in einem Fehlerzustand, in dem das Rührwerk durch seine Gewichtskraft nach unten gezogen wird,
- Fig. 3: den Tauchrührer, wobei ein Bergeschieber das Rührwerk in einem Bergezustand nach oben befördert.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

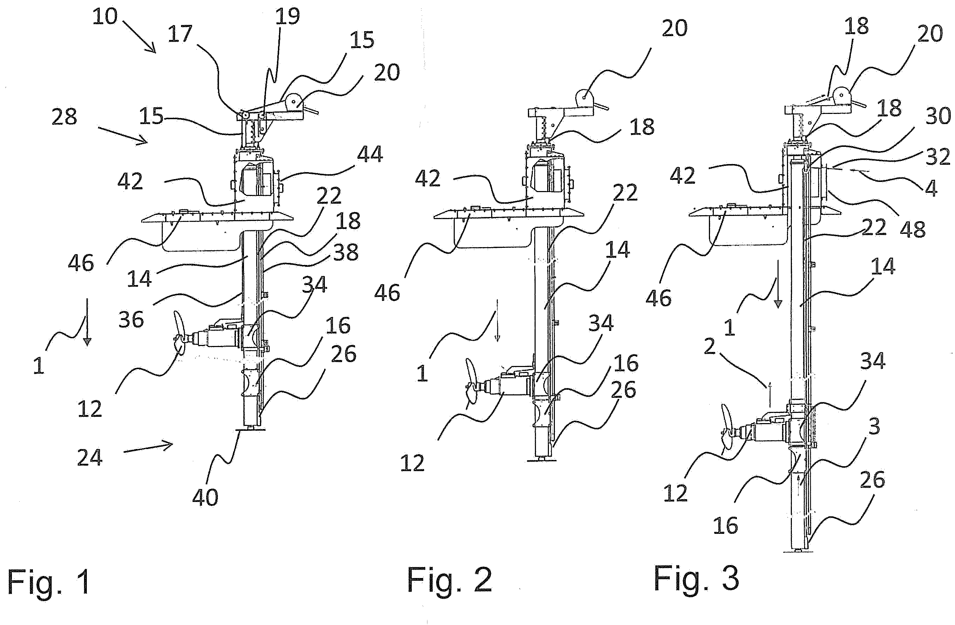

In Figur 1 ist eine beispielhafte Ausführungsform eines erfindungsgemäßen Tauchrührers 10 für einen Flüssigkeitsbehälter, der beispielsweise in einer Biogasanlage zum Einsatz kommt, in einem normalen Betriebszustand abgebildet. Der Tauchrührer 10 ist vorzugsweise senkrecht in eine Füllmasse eingetaucht, die sich in dem Flüssigkeitsbehälter befindet. Der Flüssigkeitsbehälter ist nicht in den Figuren abgebildet.

Der Tauchrührer 10 umfasst ein Rührwerk 12 und eine Säule 14. Das Rührwerk 12 ist in verschiebbarer Weise an der Säule 14 angebracht, wobei das Rührwerk 12 quer von der Säule 14 absteht. Das Rührwerk 12 ist vorzugsweise senkrecht zur Säule 14 ausgerichtet. Das Rührwerk 12 beinhaltet wenigstens einen Elektromotor, der eine Abtriebswelle aufweist, die mit einem Propeller an einem distalen Ende des Rührwerks verbunden ist, sodass der Propeller durch den Elektromotor angetrieben wird. Durch den Propeller des Rührwerks 12 wird die Füllmasse im Flüssigkeitsbehälter durchgerührt. Dabei wird das Rührwerk 12 entlang der Säule 14 in der Höhe entsprechend der Füllmasse eingestellt.

Das Rührwerk 12 ist auf einem Rührwerksschlitten 34 angebracht, wobei der Rührwerksschlitten 34 die Säule 14 umgreift. Der Rührwerksschlitten 34 ist verschiebbar auf der Säule 14 angeordnet, sodass das gesamte Rührwerk 12 entlang der Säule 14 verschoben werden kann. Dadurch wird eine Höhenposition des Rührwerks 12 an der vorzugsweise senkrecht aufgestellten Säule 14 eingestellt.

Damit die Höhe in einem normalen fehlerfreien Betriebszustand eingestellt werden kann, ist an dem Rührwerk 12 an einer nach oben gerichteten Seite ein Rührwerksseil 15 befestigt, welches der Gewichtskraft des Rührwerks 12 entgegengewirkt. Soll nun das Rührwerk 12 entgegen der Erdanziehungsrichtung 1 nach oben befördert werden, wird in dem Rührwerksseil 15 eine Kraft erzeugt, die höher als die Gewichtskraft des Rührwerks 12 ist. Wenn das Rührwerk 12 abgesenkt werden soll, wird die Kraft in Rührwerksseil 15 verringert, bis sie geringer ist als die Gewichtskraft des Rührwerks 12, sodass die Differenz beider Kräfte eine Abwärtsbewegung des Rührwerks 12 verursacht.

Das Rührwerksseil 15 ist entlang einer dem Rührwerk 12 zugewandten Seite 36 der Säule 14 geführt. Das Rührwerksseil 15 tritt durch eine gasdichte Durchführung 42 hindurch und wird zu einer Seilwinde 20 geführt. Dabei wird das Rührwerksseil 15 durch eine Rührwerksumlenkrolle 17 von der Längsrichtung der Säule 14 zu der Seilwinde 20 umgelenkt. Die Seilwinde 20 und die Rührwerksumlenkrolle 17 sind an einem oberen Ende 28 der Säule 14 angeordnet. Die Seilwinde 20 kann mittels eines Elektromotors, eines Verbrennungsmotors oder von Hand betätigt werden, und das Rührwerksseil 15 auf eine Trommel der Seilwinde 20 gewickelt werden. Durch das Aufwickeln des Rührwerksseils 15 wird die Kraft zur Einstellung der Höhe des Rührwerks 12 erzeugt.

Üblicherweise weist der Flüssigkeitsbehälter einen Boden 40 auf, auf den ein unteres Ende 24 der Säule 14 gestellt ist. Das untere Ende 24 kann durch ein Befestigungsmittel im Boden 40 verankert werden. Von dem Boden 40 aus erstreckt sich die Säule 14 vorzugsweise senkrecht nach oben bis zu einer Abdeckung des Flüssigkeitsbehälters. Der Tauchrührer 10 durchstößt an einem Punkt die Abdeckung des Flüssigkeitsbehälters. Es ist insbesondere eine Öffnung in der Abdeckung für das Durchführen des Tauchrührers 10 vorgesehen. An dem Ort, an dem der Tauchrührer 10 die Abdeckung durchdringt, ist die gasdichte Durchführung 42 aufgesetzt. Die gasdichte Durchführung 42 verhindert ein Austreten von Gas aus dem Innenraum des Flüssigkeitsbehälters. Die gasdichte Durchführung 42 umfasst einen Wartungsdeckel 44 und eine Luke 46. Die Luke 46 ermöglicht dabei einen Zugang zu dem Innenraum des Flüssigkeitsbehälters in Erdanziehungsrichtung 1.

Unterhalb des Rührwerksschlittens 34 ist ein Bergeschieber 16 zwischen Boden 40 und Rührwerk 12 auf der Säule 14 angeordnet. Der Bergeschieber 16 umgreift die Säule 14 und weist vorzugsweise an wenigstens zwei Seiten jeweils ein Führungsblech auf, das an einem Rand einen kreisförmigen Ausschnitt aufweist. Ferner ist der Bergeschieber 16 mit einem Bergeseil 18 verbunden. Das Bergeseil 18 ist auf einer nach oben gerichteten Seite des Bergeschiebers 16 befestigt. Das Bergeseil 18 wird auf einer dem Rührwerk 12 abgewandten Seite 38 der Säule 14 nach oben wenigstens bis zur gasdichten Durchführung 42 entlanggeführt. Eine Bergeumlenkrolle 19 ist im Bereich des oberen Endes 28 der Säule 14 angeordnet, durch die das Bergeseil 18 von der vertikalen Richtung der Säule 14 zur Seilwinde 20 in einem Bergezustand nach Figur 3 abgelenkt wird. Im normalen Betriebszustand des Tauchrührers 10 ist der Bergeschieber 16 in einer Ausgangsposition am unteren Ende 24 der Säule 14 positioniert, und das Rührwerk 12 von dem Bergeschieber 16 beabstandet. Das Rührwerk 12 ist im normalen Betriebszustand lediglich in seiner untersten Position, bei dem es vollständig entlang der Säule 14 in den Flüssigkeitsbehälter abgesenkt ist, auf dem Bergeschieber 16 angeordnet.

Ein Rückholseil 22 ist auf einer dem Boden 40 zugewandten Seite des Bergeschiebers 16 befestigt. Das Rückholseil 22 wird auf der gleichen Seite 38 wie das Bergeseil 18 entlang der Säule 14 geführt. Jedoch erstreckt sich das Rückholseil 22 von dem Bergeschieber 16 zuerst in Richtung des Bodens 40, um von einer am unteren Ende 24 angeordneten unteren Rückholumlenkrolle 26 um 180° nach oben umgelenkt zu werden. Dadurch erstreckt sich das Rückholseil 22 entlang der Säule 14 nach oben bis zur gasdichten Durchführung 42.

Ein Fehlerzustand des Tauchrührers 10 ist in Figur 2 abgebildet. Der Fehlerzustand zeichnet sich dadurch aus, dass das Rührwerksseil 15 gerissen ist oder sich von der Seilwinde 20 gelöst hat, sodass das Rührwerksseil 15 keine Kraft der Gewichtskraft des Rührwerks 12 entgegensetzt, und dieses somit unkontrolliert in Erdanziehungsrichtung 1 nach unten in den Flüssigkeitsbehälter absinkt. Dabei sinkt das Rührwerk 12 so weit ab, dass es am tiefsten Punkt auf dem Bergeschieber 16 anschlägt. Der Bergeschieber 16 wirkt als Anschlag. Im schlechtesten Fall ist das Rührwerksseil 15 nicht mehr durch die Luke 46 oder den Wartungsdeckel 44 im Bereich des oberen Endes 28 der Säule 14 auffindbar. Das Rührwerksseil 15 kann in einem solchen Fall beispielsweise in den Flüssigkeitsbehälter gefallen sein.

Bei einer bevorzugten Ausgestaltung des Vorschlags ist vorgesehen, dass der Tauchrührer 10 in einen Bergezustand wie in Figur 3 versetzt wird. Dadurch kann das Rührwerk 12 aus dem vollständig abgesenkten Zustand wieder nach oben befördert werden. Dazu wird der Wartungsdeckel 44 entfernt, und das Bergeseil 18 in die Seilwinde 20 geführt. Das Bergeseil 18 wird mittels der Seilwinde 20 auf eine Trommel gewickelt, und eine Kraft 3 wirkt auf den Bergeschieber 16. Diese Kraft bewegt den Bergeschieber 16 und das Rührwerk 12 in Aufwärtsrichtung 2.

Im Bergezustand während der Bewegung in Aufwärtsrichtung 2 liegt der Bergeschieber 16 an dem Rührwerksschlitten 34 des Rührwerks 12 an, bis das Rührwerk 12 in einer oberen Position unmittelbar unterhalb der Luke 46 zum Liegen kommt. Durch die Luke 46 können Wartungs- und Reparaturmaßnahmen an dem Rührwerk 12 bzw. an dem Rührwerksseil 15 vorgenommen werden. Beispielsweise kann ein in den Flüssigkeitsbehälter gefallenes Rührwerksseil 15 wieder nach oben befördert und in die Seilwinde 20 geführt werden. Ebenso kann ein Seil komplett ausgetauscht werden.

Ein unteres Teil des Rückholseils 22 ist durch eine Öffnung 48, die durch den Wartungsdeckel 44 bedeckt war, hinausgeführt. Das Rückholseil 22 ist mittels einer oberen Rückholumlenkrolle 30 von der Längsrichtung der Säule 14 so abgelenkt, dass es durch die Öffnung 48 durchgeführt ist. Während der Bergebewegung des Rührwerks 12 in Aufwärtsrichtung 2 wird das so durch die Öffnung 48 hinausgeführte Rückholseil 22 in einer Einzugsrichtung 4 in die Öffnung 48 hineingezogen, da das Rückholseil 22 um die untere Rückholumlenkrolle 26 herumgelegt ist.

Nach dem das Rührwerk 12 in die obere Position unterhalb der Luke 46 angeordnet ist, befindet sich auch der Bergeschieber 16 in einer oberen Position, die beabstandet von seiner Ausgangsposition am unteren Ende 24 der Säule 14 angeordnet ist. Um den Bergeschieber 16 wieder zurück in die Ausgangsposition am unteren Ende 26 zu befördern, wird am Rückholseil 22 zur Einzugsrichtung 4 in entgegengesetzter Richtung gezogen. Die dadurch in das Rückholseil 22 geführte Kraft wirkt durch die untere Rückholumlenkrolle 26 am Bergeschieber 16 nach unten, so dass der Bergeschieber 16 entlang der Säule 14 in die Ausgangsposition am unteren Ende 24 gezogen wird.

## Patentansprüche

1. Tauchrührer für einen Flüssigkeitsbehälter mit einem Rührwerk (12), das verschiebbar an einer Säule (14) angeordnet ist, wobei das Rührwerk (12) mit einem Rührwerksseil (15) verbunden ist, durch das das Rührwerk (12) höhenverstellbar entlang der Säule (14) führbar ist, **dadurch gekennzeichnet, dass** ein Bergeschieber (16) bezüglich der Erdanziehungsrichtung (1) unterhalb des Rührwerks (12) an der Säule (14) angebracht ist, und mittels eines an dem Bergeschieber (16) angebrachten Bergeseils (18) entlang der Säule (14) verschiebbar ist.

2. Tauchrührer nach Anspruch 1, **dadurch gekennzeichnet, dass** eine Seilwinde (20) an einem oberen Ende der Säule (14) angebracht ist, wobei das Rührwerksseil (15) und/oder das Bergeseil (18) auf die Seilwinde (20) aufwickelbar sind.

3. Tauchrührer nach einem der vorhergehenden Ansprüche, **dadurch gekennzeichnet, dass** ein Rückholseil (22) an dem Bergeschieber (16) angebracht ist, mit dem der Bergeschieber (16) in Erdanziehungsrichtung (1) verschiebbar ist.

4. Tauchrührer nach einem der vorhergehenden Ansprüche, **dadurch gekennzeichnet, dass** an einem unteren Ende der Säule (14) eine untere Rückholumlenkrolle (26) angeordnet ist, mit der das Rückholseil (22) umgelenkt wird.

5. Tauchrührer nach einem der vorhergehenden Ansprüche, **dadurch gekennzeichnet, dass** an einem oberen Ende der Säule (14) eine obere Rückholumlenkrolle (30) angeordnet ist, die einen Teil (32) des Rückholseils (22) von der Säule (14) weglenkt.

6. Tauchrührer nach einem der vorhergehenden Ansprüche, **dadurch gekennzeichnet, dass** die Säule (14) mit der Erdanziehungsrichtung (1) fluchtend ausgerichtet ist, sodass das Bergeseil (18) der gesamten Gewichtskraft des Rührwerks (12) entgegenwirkt.

7. Tauchrührer nach einem der vorhergehenden Ansprüche, **dadurch gekennzeichnet, dass** der Bergeschieber (16) auf der Säule (14) beweglich gelagert ist und/oder der Bergeschieber (16) die Säule (14) umgreift, und schlittenartig entlang der Säule (14) gleitet.

8. Tauchrührer nach einem der vorhergehenden Ansprüche, **dadurch gekennzeichnet, dass** das Rührwerk (12) quer zur Säule (14) ausgerichtet ist und/oder das Rührwerk (12) und auf einem Rührwerksschlitten (34) auf der Säule (14) beweglich gelagert angeordnet ist.

9. Tauchrührer nach einem der vorhergehenden Ansprüche, **dadurch gekennzeichnet, dass** der Rührwerkschlitten (34) die Säule (14) umgreift.

10. Tauchrührer nach einem der vorhergehenden Ansprüche, **dadurch gekennzeichnet, dass** das Bergeseil (18) an einer dem Rührwerk (12) zugewandten und das Rückholseil (22) an einer dem Rührwerk (12) abgewandten Seite an dem Bergeschieber (16) angebracht ist.

11. Tauchrührer nach einem der vorhergehenden Ansprüche, **dadurch gekennzeichnet, dass** das Rührwerksseil (15) auf einer dem Rührwerk (12) zugewandten Seite (36) und das Bergeseil (18) und das Rückholseil (22) auf einer abgewandten Seite (38) der Säule (14) entlanggeführt ist und/oder das Bergeseil (18) und das Rückholseil (22) miteinander verbunden sind, insbesondere eine endlose Schlaufe oder Seilring bilden.

12. Flüssigkeitsbehälter mit einem Tauchrührer (10) nach einem der vorherigen Ansprüche, wobei in dem Flüssigkeitsbehälter die Säule (14) des Tauchrührers (10) eingetaucht ist, wobei der Flüssigkeitsbehälter eine Abdeckung aufweist, unter der ein Rührwerk (12) des Tauchrührers (10) angeordnet ist, wobei ein Bergeschieber (16) bezüglich der Erdanziehungsrichtung (1) unterhalb des Rührwerks (12) an der Säule (14) angebracht ist, und mittels eines an dem Bergeschieber (16) angebrachten Bergeseils (18) entlang der Säule (14) verschiebbar ist.

13. Flüssigkeitsbehälter nach Anspruch 12, **dadurch gekennzeichnet, dass** der Tauchrührer (10) senkrecht in dem Flüssigkeitsbehälter angeordnet ist, und mit einem unteren Ende (24) auf einem Boden (40) des Flüssigkeitsbehälters steht und/oder der Tauchrührer (10) am oberen Ende (28) eine gasdichte Durchführung (40) aufweist, die gasdicht auf die Abdeckung des Flüssigkeitsbehälters aufgesetzt ist.

14. Flüssigkeitsbehälter nach Anspruch 12 oder 13, **dadurch gekennzeichnet, dass** das Rührwerk (12) mittels des Bergeschiebers (16) gegen die Gewichtskraft aufwärts schiebbar und mittels eines Rückholseils (22) der Bergeschieber (16) abwärts absenkbar ist.

15. Biogasanlage mit einem Tauchrührer (10) nach einem der vorherigen Ansprüche 1 bis 11, wobei in der Biogasanlage die Säule (14) des Tauchrührers (10) eingetaucht ist, wobei der Flüssigkeitsbehälter eine Abdeckung aufweist, unter der ein Rührwerk (12) des Tauchrührers (10) angeordnet ist, wobei ein Bergeschieber (16) bezüglich der Erdanziehungsrichtung (1) unterhalb des Rührwerks (12) an der Säule (14) separat angebracht ist, und mittels eines an dem Bergeschieber (16) angebrachten Bergeseils (18) entlang der Säule (14) verschiebbar ist.

## Claims

1. Submersible agitator for a liquid container having an agitator unit (12) which is displaceably arranged on a column (14), said agitator unit (12) being connected to an agitator unit rope (15) by which the agitator unit (12) is height-adjustably guidable along the column (14), **characterized in that** a recovery slide (16) is attached below the agitator unit (12) on the column (14) relative to the direction of the earth's gravity (1) and is displaceable along the column (14) by means of a recovery rope (18) attached to the recovery slide (16).

2. Submersible agitator according to claim 1, **characterized in that** a rope winch (20) is attached to an upper end of the column (14), the agitator unit rope (15) and/or the recovery rope (18) being windable onto said rope winch (20).

3. Submersible agitator according to one of the preceding claims, **characterized in that** a return rope (22) is attached to the recovery slide (16), using which the recovery slide (16) is displaceable in the direction of the earth's gravity (1).

4. Submersible agitator according to one of the preceding claims, **characterized in that** a lower return deflection pulley (26) is arranged at a lower end of the column (14), using which the return rope (22) is deflected.

5. Submersible agitator according to one of the preceding claims, **characterized in that** an upper return deflection pulley (30) is arranged at an upper end of the column (14) and deflects a part (32) of the return rope (22) away from the column (14).

6. Submersible agitator according to one of the preceding claims, **characterized in that** the column (14) is aligned flush with the direction of the earth's gravity (1), such that the recovery rope (18) counteracts the entire weight force of the agitator unit (12).

7. Submersible agitator according to one of the preceding claims, **characterized in that** the recovery slide (16) is movably mounted on the column (14) and/or the recovery slide (16) surrounds the column (14) and glides slide-like along the column (14).

8. Submersible agitator according to one of the preceding claims, **characterized in that** the agitator unit (12) is aligned transverse to the column (14) and/or the agitator unit (12) is arranged movably mounted on an agitator unit slide (34) on the column (14).

9. Submersible agitator according to one of the preceding claims, **characterized in that** the agitator unit slide (34) surrounds the column (14).

10. Submersible agitator according to one of the preceding claims, **characterized in that** the recovery rope (18) is attached to the recovery slide (16) on a side facing the agitator unit (12) and the return rope (22) on a side facing away from the agitator unit (12).

11. Submersible agitator according to one of the preceding claims, **characterized in that** the agitator unit rope (15) is passed along a side (36) of the column (14) facing the agitator unit (12) and the recovery rope (18) and the return rope (22) are passed along a side (38) facing away from it, and/or the recovery rope (18) and the return rope (22) are connected to one another, in particular forming an endless loop or rope ring.

12. Liquid container having a submersible agitator (10) according to one of the previous claims, the column (14) of the submersible agitator (10) being submerged in the liquid container, the liquid container having a cover under which is arranged an agitator unit (12) of the submersible agitator (10), a recovery slide (16) being attached below the agitator unit (12) on the column (14) relative to the direction of the earth's gravity (1) and being displaceable along the column (14) by means of a recovery rope (18) attached to the recovery slide (16).

13. Liquid container according to claim 12, **characterized in that** the submersible agitator (10) is arranged vertical inside the liquid container and rests with a lower end (24) on a floor (40) of the liquid container and/or the submersible agitator (10) has at the upper end (28) a gas-tight feedthrough (40) which is fitted in gas-tight manner onto the cover of the liquid container.

14. Liquid container according to claim 12 or 13, **characterized in that** the agitator unit (12) is slidable upwards against the weight force by means of the recovery slide (16) and is lowerable downwards by means of a return rope (22) of the recovery slide (16).

15. Biogas plant having a submersible agitator (10) according to one of the previous claims 1 to 11, the column (14) of the submersible agitator (10) being submerged in said biogas plant, the liquid container having a cover under which is arranged an agitator unit (12) of the submersible agitator (10), a recovery slide (16) being separately attached below the agitator unit (12) on the column (14) relative to the direction of the earth's gravity (1) and being displaceable along the column (14) by means of a recovery rope (18) attached to the recovery slide (16).

## Revendications

1. Agitateur immergé pour un réservoir de liquide avec un système d'agitation (12) qui est disposé de manière à être déplaçable sur une colonne (14), sachant que le système d'agitation (12) est relié à un câble du système d'agitation (15) au moyen duquel le système d'agitation (12) est réglable en hauteur le long de la colonne (14), **caractérisé en ce qu'**un coulisseau (16) est monté sur la colonne (14) en dessous du système d'agitation (12) par rapport au sens d'attraction terrestre (1), et est déplaçable le long de la colonne (14) au moyen d'un câble de sauvetage (18) monté sur le coulisseau (16).

2. Agitateur immergé selon la revendication 1, **caractérisé en ce qu'**un treuil (20) est monté sur l'extrémité supérieure de la colonne (14), sachant que le câble du système d'agitation (15) et/ou le câble de sauvetage (18) sont enroulables sur le treuil (20).

3. Agitateur selon une des revendications précédentes, **caractérisé en ce qu'**un câble de rappel (22) est installé sur le coulisseau (16), au moyen duquel le coulisseau (16) est déplaçable dans le sens de l'attraction terrestre (1).

4. Agitateur selon une des revendications précédentes, **caractérisé en ce qu'**est disposé sur une extrémité inférieure de la colonne (14) un galet de rappel inférieur (26) au moyen duquel le câble de rappel (22) est renvoyé.

5. Agitateur selon une des revendications précédentes, **caractérisé en ce qu'**est disposé sur une extrémité supérieure de la colonne (14) un galet de rappel supérieur (30) qui dévie de la colonne (14) une partie (32) du câble de rappel (22).

6. Agitateur selon une des revendications précédentes, **caractérisé en ce que** la colonne (14) est orientée de manière à être alignée au sens de l'attraction terrestre (1) de manière à ce que le câble de sauvetage (18) s'oppose à l'action du poids total du système d'agitation (12).

7. Agitateur selon une des revendications précédentes, **caractérisé en ce que** le coulisseau (16) est monté de manière mobile sur la colonne (14) et/ou que le coulisseau (16) entoure la colonne (14) et glisse à la manière d'un chariot le long de la colonne (14).

8. Agitateur selon une des revendications précédentes, **caractérisé en ce que** le système d'agitation (12) est orienté transversalement à la colonne (14) et/ou que le système d'agitation (12) est monté sur un chariot du système d'agitation (34) de manière à être mobile sur la colonne (14).

9. Agitateur selon une des revendications précédentes, **caractérisé en ce que** le chariot du système d'agitation (34) entoure la colonne (14).

10. Agitateur selon une des revendications précédentes, **caractérisé en ce que** le câble de sauvetage (18) est monté sur le coulisseau (16) sur un côté tourné vers le système d'agitation (12) et que le câble de rappel (22) est monté sur le coulisseau sur un côté opposé au système d'agitation (12).

11. Agitateur selon une des revendications précédentes, **caractérisé en ce que** le câble du système d'agitation (15) est guidé le long de la colonne (14) sur un côté (36) tourné vers le système d'agitation (12) et que le câble de sauvetage (18) et le câble de rappel (22) sont guidés sur un côté opposé (38) et/ou que le câble de sauvetage (18) et le câble de rappel (22) sont reliés ensemble et forment notamment une boucle fermée ou un collier de corde.

12. Réservoir de liquide avec un agitateur immergé (10) selon une des revendications précédentes, sachant que la colonne (14) de l'agitateur immergé (10) est immergée dans le réservoir de liquide, sachant que le réservoir de liquide présente un couvercle sous lequel est disposé un système d'agitation (12) de l'agitateur immergé (10), sachant qu'un coulisseau (16) est monté sur la colonne (14), en dessous du système d'agitation (12), par rapport au sens de l'attraction terrestre (1), et est déplaçable le long de la colonne (14) au moyen d'un câble de sauvetage (18) monté sur le coulisseau (16).

13. Réservoir de liquide selon la revendication 12, **caractérisé en ce que** l'agitateur immergé (10) est disposé verticalement dans le réservoir de liquide, et repose, au niveau d'une extrémité inférieure (24) sur le fond (40) du réservoir de liquide et/ou que l'agitateur immergé (10) présente, sur l'extrémité supérieure (28), une traversée étanche au gaz (40) qui touche le couvercle du réservoir de liquide de manière étanche au gaz.

14. Réservoir de liquide selon la revendication 12 ou 13, **caractérisé en ce que** le système d'agitation (12) est coulissable vers le haut au moyen du coulisseau (16), dans le sens opposé au poids et abaissable au moyen d'un câble de rappel (22) du coulisseau (16).

15. Centrale au biogaz avec un agitateur immergé (10) selon une des revendications précédentes 1 à 11, sachant que, dans la centrale au biogaz, la colonne (14) de l'agitateur immergé (10) est immergée, sachant que le réservoir de liquide présente un couvercle sous lequel est disposé un système d'agitation (12) de l'agitateur immergé (10), sachant qu'un coulisseau (16) est monté séparément sur la colonne (14), en dessous du système d'agitation (12), par rapport au sens de l'attraction terrestre (1), et est déplaçable le long de la colonne (14) au moyen d'un câble de sauvetage (18) monté sur le coulisseau (16).
